Europäisches Patentamt

European Patent Office

Office européen des brevets

(19)

(11) Veröffentlichungsnummer: **0 120 808**
**A2**

(12) **EUROPÄISCHE PATENTANMELDUNG**

(21) Anmeldenummer: **84810086.3**

(22) Anmeldetag: **20.02.84**

(51) Int. Cl.³: **C 01 F 11/18**
**C 09 D 17/00**

(30) Priorität: **25.02.83 GB 8305346**

(43) Veröffentlichungstag der Anmeldung:
**03.10.84 Patentblatt 84/40**

(84) Benannte Vertragsstaaten:
**BE DE FR GB IT NL**

(71) Anmelder: **CIBA-GEIGY AG**
**Postfach**
**CH-4002 Basel(CH)**

(72) Erfinder: **Howard, Donald Kearey**
**28 Kingsway Avenue**
**Levenshulme Manchester M19 2DH(GB)**

(72) Erfinder: **Finan, Michael Anthony**
**9 Coniston Way**
**Macclesfield Cheshire SL11 7XR(GB)**

(72) Erfinder: **Lees, Michael John**
**37 Furness Road**
**Davyhulme Urmston Manchester M31 14Q(GB)**

(54) Feinteiliges Calciumcarbonat und Verfahren zu dessen Herstellung.

(57) Die vorliegende Erfindung betrifft feinteiliges Calciumcarbonat enthaltend 0,1 bis 10 Gew.-%, bezogen auf das Gewicht an Calciumcarbonat, an Polymaleinsäure oder ein wasserlösliches Salz der Polymaleinsäure.

Croydon Printing Company Ltd.

CIBA-GEIGY AG                                   3-14337/=

Basel (Schweiz)


Feinteiliges Calciumcarbonat und Verfahren zu dessen Herstellung

Die vorliegende Erfindung betrifft Calciumcarbonat in modifizierter Form und ein Verfahren zu dessen Herstellung.

Oberflächenbehandlungen von Calciumcarbonat, um dessen Verträglichkeit und Eigenschaften in wässrigen oder nicht-wässrigen Medien zu verändern, sind bekannt. Zur Verbesserung der Verträglichkeit mit Polymeren und Kautschuken kann Calciumcarbonat mit Stearinsäure behandelt werden. Calciumcarbonat wurde auch schon in Gegenwart von Polyelektrolyten, wie Polyacrylaten ausgefällt, um einen hohen Feststoffgehalt an Calciumcarbonat in wässrigen Dispersionen zu erzielen (vgl. z.B. U.S. Patentschrift 4.242.318). Ferner ist schon Calciumcarbonat in Form kugelförmiger Aggregate von feinen nadelförmigen Kristallen beschrieben worden; diese Partikel werden im allgemeinen als runde Calciumcarbonatteilchen bezeichnet.

Es wurde nun gefunden, dass die Behandlung von Calciumcarbonat mit Polymaleinsäure oder Salzen davon in wässriger Lösung unter anschliessendem Abtrennen und Trocknen des Calciumcarbonats überraschenderweise ein Calciumcarbonat-Pulver ergibt, das beim Kontakt mit verschiedenen Oberflächen, wie Metallen, Holz, Glas, Kautschuk, Papier und Kunststoffen, wegen der entstehenden starken statischen Ladung als dünner Film haftet und das in trockenem Zustand fliessfähig ist. Das Umrühren des Pulvers erhöht dessen Fliessfähigkeit. Das trockene modifizierte Calciumcarbonat fliesst durch enge Oeffnungen, in dem Pulver können Wellenbewegungen erzeugt werden, und das Pulver überträgt sogar Stosswellen.

- 2 -

Gegenstand der Erfindung ist demnach feinteiliges Calciumcarbonat, in welchem, bezogen auf das Calciumcarbonat, 0,1 bis 10 Gew.% einer Polymaleinsäure oder eines wasserlöslichen Salzes davon einverleibt sind.

Das erfindungsgemässe Calciumcarbonat kann durch Ausfällen von Calciumcarbonat in Gegenwart von Polymaleinsäure oder eines (wasserlöslichen) Salzes davon hergestellt werden. Das nach dem erfindungsgemässen Verfahren hergestellte Calciumcarbonat besteht aus Teilchen, die im allgemeinen kugelförmig sind, und es kann einen Teilchendurchmesser im Bereich von 0,01 bis 50 µm, besonders 0,5 bis 20 µm aufweisen. Die optimale Teilchengrösse hängt normalerweise von der beabsichtigten Verwendung ab.

Die Calciumcarbonat-Teilchen, die nach dem erfindungsgemässen Verfahren erhalten werden, sind stark porös mit einer Porenweite von vorzugsweise zwischen 0,5 und 200 nm, besonders 2 bis 50 nm. Dementsprechend weisen die Teilchen eine sehr grosse spezifische Oberfläche auf, vor allem im Vergleich zu Calciumcarbonat, das durch Ausfällen in Abwesenheit von Polymaleinsäure oder eines Salzes davon hergestellt wird.

Die Herstellung des modifizierten Calciumcarbonats durch Ausfällen von Calciumcarbonat in Gegenwart einer Polymaleinsäure oder eines wasserlöslichen Salzes davon kann nach an sich bekannten Methoden erfolgen, z.B. durch Carbonieren von Kalk oder durch Vermischen der Lösungen eines löslichen Calciumsalzes und eines löslichen Carbonats, wobei übersättigte Calciumcarbonatlösungen entstehen, aus denen das Calciumcarbonat ausfällt.

Das modifizierte Calciumcarbonat kann z.B. dadurch hergestellt werden, dass man konzentrierte Lösungen eines löslichen Calciumsalzes und eines löslichen Carbonats in Gegenwart von Polymaleinsäure oder eines Salzes davon unter kräftigem Rühren während der Ausfäll-Phase vermischt. Das Polymaleinsäuresalz kann entweder zu der einen oder der

- 3 -

anderen oder zu beiden der zu vermischenden Lösungen zugegeben werden, wird aber vorzugsweise vor dem Vermischen der Calciumsalzlösung zugegeben. Andererseits ist es auch möglich, die beiden Lösungen zu einer wässrigen Lösung der Polymaleinsäure oder eines Salzes davon zu geben. Das ausgefällte Calciumcarbonat liegt in Form von kleinen (statisch) geladenen Kügelchen vor, die im trockenen Zustand ausgezeichnete Fliessfähigkeitseigenschaften aufweisen. Die Zugabe der Polymaleinsäure beim Ausfällen verstärkt die Bildung von kugelförmigen Teilchen, verringert den Grad der Teilchenaggregation und verringert die Streuung der Teilchengrösse. Die erhaltenen Teilchen sind poröse Kügelchen, die sich deutlich von den kugelförmigen Agglomeraten feiner nadelförmiger Kristalle (im allgemeinen runde Calciumcarbonatteilchen genannt) unterscheiden. Die Grösse der kugelförmigen Teilchen kann den verschiedenen Anwendungszwecken angepasst werden, indem man die Mischgeschwindigkeit und/oder die Rührintensität während des Ausfällens entsprechend einstellt.

Bei der erfindungsgemäss verwendeten Polymaleinsäure kann es sich um hydrolysiertes Polymaleinsäureanhydrid mit einem Molekulargewicht unterhalb 5000 handeln, wie es z.B. in der britischen Patentschrift 1 369 429 beschrieben ist, und es kann in Form eines wasserlöslichen Salzes, z.B. eines Alkalimetallsalzes, vorliegen.

Die einzusetzende Menge an Polymaleinsäure beträgt 0,1 bis 10 Gew.% bezogen auf das zu fällende Calciumcarbonat. Die bevorzugte Menge an Polymaleinsäure hängt von der gewünschten Teilchengrösse bzw. Teilchenoberfläche des Calciumcarbonats ab. Je kleiner die Teilchen bzw. je grösser deren Oberflächen sein sollen, um so mehr Polymaleinsäure wird benötigt.

Fast die gesamte Menge an Polymaleinsäure oder an Salz der Polymaleinsäure wird in das Calciumcarbonat eingebaut. Die tatsächliche Menge ist gegenwärtig noch nicht bekannt, jedoch kann Polymaleinsäure bzw. deren Salz in den Calciumcarbonatteilchen analytisch nachgewiesen werden.

- 4 -

Ein bevorzugter Anwendungsbereich des erfindungsgemässen Calciumcarbonats ist die Verwendung als Füllstoff, beispielsweise als weisser
leichtgewichtiger Füllstoff für die Papierherstellung, für Farben oder
für die Kunststoffverarbeitung.

Das erfindungsgemässe Calciumcarbonat haftet ohne weiteres auf den
meisten Oberflächen und lässt sich effektiv als trockenes Gleitmittel
einsetzen. Es lässt sich gut mit basischen Farbstoffen anfärben und
adsorbiert Uebergangsmetallionen wie beispielsweise Kupferionen aus
wässriger Lösung. Es lässt sich ferner als Trägermaterial für Additive wie beispielsweise Antioxidantien, Lichtstabilisatoren, Flammschutzmittel, Pestizide oder Pharmazeutika verwenden.

In getrockneter Form lässt sich das modifizierte Calciumcarbonat als
Fliessbett verwenden. Ein anderes Einsatzgebiet betrifft die thermische oder akustische Isolation.

Beispiel 1:  Herstellung von modifiziertem Calciumcarbonat

Eine erste Lösung besteht aus 1140 Gew.-Teilen Calciumchlorid-Hexahydrat, 16,8 Gew.-Teilen Polymaleinsäure vom Molekulargewicht 705
und einem Säurewert von 544 mg KOH/g (eingesetzt als 50 %ige wässrige Lösung) und aus 5600 Gew.-Teilen Wasser.

Eine zweite Lösung besteht aus 541 Gew.-Teilen Natriumcarbonat
(wasserfrei) und aus 6200 Gew.-Teilen Wasser.

Beide Lösungen werden über einen Zeitraum von 10 Minuten in ein Rührgefäss gegeben, das mit einem effizienten Rührer ausgestattet ist.
Die so erhaltene Suspension wird weitere 15 Minuten gerührt und anschliessend filtriert. Das Produkt wird in 3000 Gew.-Teilen Wasser
suspendiert, gerührt, wiederum abfiltriert, mit 1000 Gew.-Teilen
Wasser gewaschen und bis zur Gewichtskonstanz getrocknet.

- 5 -

Man erhält auf diese Weise 504,9 Gew.-Teile modifiziertes Calciumcarbonat mit einer B.E.T.-Oberfläche (gemessen mit Stickstoff) von
23 $m^2$/g.

Mit einer Elementaranalyse kann die Anwesenheit von 1,73 Gew.-%
organischen Kohlenstoffs in den Partikeln nachgewiesen werden. Nimmt
man an, dass die gesamte Menge an Polymaleinsäure in die Calciumcarbonatpartikel eingebaut wurde, so erwartet man einen organischen
Kohlenstoffanteil von 1,79 Gew.-%.

Beispiel 2:  Herstellung von nicht modifiziertem Calciumcarbonat

Die Herstellung dieses Produktes erfolgt in Analogie zu dem Verfahren
in Beispiel 1, wobei jedoch keine Polymaleinsäure verwendet wird.
Man erhält 480 Gew.-Teile Calciumcarbonat mit einer B.E.T.-Oberfläche
(gemessen mit Stickstoff) von 0,53 $m^2$/g.

Beispiel 3:  Proben der Produkte von Beispiel 1 und von Beispiel 2
werden über ein Blatt Papier herabrutschen gelassen und anschliessend wird die elektrostatische Aufladung des Papiers gemessen.
Die mittlere Aufladung (aus 15 Einzelversuchen) beträgt 98000 $V/m^2$,
wenn das Produkt von Beispiel 1 verwendet wird; sie beträgt 3666 $V/m^2$,
wenn das Produkt von Beispiel 2 verwendet wird.

Dies zeigt, dass das erfindungsgemäss modifizierte Calciumcarbonat
eine sehr viel höhere statische Ladung trägt, als gewöhnliches
Calciumcarbonat.

Beispiel 4: Zur Charakterisierung der Fliesseigenschaften der Produkte aus den Beispielen 1 oder 2 wird der Durchmesser einer Trichteröffnung bestimmt, bei der das betreffende Produkt gerade noch hindurchrieselt.

Das modifizierte Calciumcarbonat von Beispiel 1 fliesst ohne mechanische Unterstützung noch durch einen Trichter mit einer Auslassöffnung von 3 mm Durchmesser, während das Calciumcarbonat von Beispiel 2 eine eine Trichteröffnung von mindestens 17 mm Durchmesser benötigt.

Beispiel 5: Die Produkte von Beispiel 1 oder Beispiel 2 werden jeweils auf eine ebene horizontale Unterlage aufgebracht. Diese Unterlage wird nun langsam angehoben und es wird der Neigungswinkel ermittelt, bei dem die Substanzen zu fliessen beginnen. Dieser Winkel beträgt bei dem modifizierten Calciumcarbonat (Beispiel 1) 30° während er bei dem nicht modifizierten Calciumcarbonat 60° beträgt.

Beispiel 6: Ein 60° Kegel des Materials von Beispiel 1 bzw. von Beispiel 2 mit einer anfänglichen Grundfläche von 50,3 $cm^2$ wird auf eine schwingfähige Platte aufgeschüttet. Infolge der Vibration der Unterlage zerfliessen die Kegel und die materialbedeckte Fläche vergrössert sich. Das modifizierte Calciumcarbonat (Beispiel 1) bedeckt eine Fläche von 118,9 $cm^2$, während sich gewöhnliches Calciumcarbonat (Beispiel 2) nur auf 78,6 $cm^2$ ausbreitet.

Beispiel 7: Je 5 g einer Probe des Produkts von Beispiel 1 oder von Beispiel 2 werden aus einer Höhe von 6 cm auf eine waagerechte Oberfläche fallen gelassen und die Fläche ermittelt, welche das Material anschliessend bedeckt. Im Fall des modifizierten Calciumcarbonats beträgt diese Fläche 193,8 $cm^2$, während gewöhnliches Calciumcarbonat lediglich 19 $cm^2$ bedeckt.

Die Beispiele 4 bis 7 illustrieren die generell verbesserten Fliesseigenschaften des erfindungsgemäss modifizierten Calciumcarbonats verglichen mit gewöhnlichem Calciumcarbonat ähnlicher Teilchengrösse.

Beispiel 8: Eine erste Lösung besteht aus 1140 Gew.-Teilen Calciumchlorid-Hexahydrat in 5600 Gew.-Teilen Wasser. Eine zweite Lösung besteht aus 541 Gew.-Teilen Natriumcarbonat (wasserfrei) in 6200 Gew.-Teilen Wasser. Beide Lösungen werden gemeinsam über einen Zeitraum von 10 Minuten in ein Rührgefäss gegeben, das 16,8 Gew.-Teile Polymaleinsäure (als 50 %ige wässrige Lösung) vom mittleren Molekulargewicht 705 und einer Säurezahl von 544 mg KOH/g enthält. Das Produkt wird in Analogie zu Beispiel 1 aufgearbeitet. Es besitzt ähnliche Eigenschaften wie das modifizierte Calciumcarbonat von Beispiel 1.

Elementaranalytisch kann 1,85 % organisch gebundener Kohlenstoff nachgewiesen werden. Man erwartet einen Kohlenstoffgehalt von 1,79 %, wenn man annimmt, dass die gesamte vorgelegte Polymaleinsäure in das Calciumcarbonat eingebaut wird.

Beispiel 9: 111 Gew.-Teile Calciumhydroxid werden unter Rühren in 1000 Gew.-Teilen Wasser suspendiert. Kohlendioxidgas wird durch die Suspension geleitet, bis der pH-Wert sich bei 7 stabilisiert hat.

Während der Carbonierung werden jetzt 9,5 Gew.-Teile Polymaleinsäure mit einem mittleren Molekulargewicht von 705 und einer Säurezahl von 544 mg KOH/g (als 50 %ige wässrige Lösung) langsam zugegeben. Während dieser Zeit wird die Suspension gekühlt, um eine Temperatur von annähernd 40°C aufrechtzuerhalten. Die Suspension wird anschliessend abfiltriert, mit 1000 ml Wasser gewaschen und bis zur Gewichtskonstanz getrocknet. Man erhält so 140,5 Gew.-Teile modifiziertes Calciumcarbonat mit ähnlichen Eigenschaften wie das Produkt von Beispiel 1.

Patentansprüche

1. Feinteiliges Calciumcarbonat enthaltend 0,1 bis 10 Gew.-%, bezogen auf das Calciumcarbonat, einer Polymaleinsäure oder eines wasserlöslichen Salzes einer Polymaleinsäure.

2. Calciumcarbonat gemäss Anspruch 1, worin die Polymaleinsäure oder deren wasserlösliches Salz ein hydrolisiertes Polymaleinsäureanhydrid ist, das ein Molekulargewicht unter 5000 besitzt.

3. Calciumcarbonat gemäss Anspruch 1 mit einem Teilchendurchmesser im Bereich von 0,01 µm bis 50 µm.

4. Feinteiliges Calciumcarbonat gemäss Anspruch 3, mit einem Teilchendurchmesser im Bereich 0,5 µm bis 20 µm.

5. Calciumcarbonat gemäss Anspruch 1 mit einer Porenweite zwischen 0,5 nm und 200 nm.

6. Calciumcarbonat gemäss Anspruch 5 mit einer Porenweite zwischen 2 nm und 50 nm.

7. Verfahren zur Herstellung eines feinteiligen Calciumcarbonats gemäss Anspruch 1, dadurch gekennzeichnet, dass man das Calciumcarbonat in Gegenwart von Polymaleinsäure oder eines wasserlöslichen Salzes der Polymaleinsäure ausfällt.

8. Verfahren gemäss Anspruch 7, worin das Ausfällen von Calciumcarbonat durch Carbonierung von Kalk erfolgt.

9. Verfahren gemäss Anspruch 7, worin das Ausfällen von Calciumcarbonat durch Mischung der Lösungen eines löslichen Calciumsalzes und eines löslichen Carbonats erfolgt.

FO 7.3/ACK/eh*/wg*